# EUROPEAN PATENT SPECIFICATION

(11) **EP 2 926 641 B1**
(45) Date of publication and mention of the grant of the patent: **31.05.2017**
(21) Application number: 15158171.7
(22) Date of filing: 09.03.2015
(51) Int. Cl.: A01D 34/535

(54) **FLAIL CUTTING ELEMENT**
DRESCHFLEGELSCHNEIDELEMENT
ÉLÉMENT DE DÉCOUPE À FLÉAUX

(30) Priority: 01.04.2014 GB 201405860
(43) Date of publication of application: 07.10.2015
(73) Proprietor: McConnel Ltd, Shropshire SY8 1JL (GB)
(72) Inventor: Frank, John, Ludlow, Shropshire SY8 1JL (GB)
(74) Representative: Unsworth, Jennifer Mary

(56) References cited:
- EP-A1- 1 915 896
- EP-A1- 2 647 277
- DE-A1- 3 507 823
- DE-U1- 8 913 065

## Description

The present invention relates to improvements in flail elements for use on vegetation cutting machines such as flail mowers, in particular improvements to the stem of such flail elements.

Known flail mowers include a rotor shaft to which a number of cutting tools, known as flails, are pivotably mounted. In use, as the rotor shaft is rotated, the flails swing out under the centrifugal force. As the flail engages the vegetation, for example a hedge or a grass verge, the vegetation is cut. Should the flail hit a hard object (e.g. a stone) it will swing out of the way, thus avoiding damage to the mower. This swinging motion can result in the flail impacting the rotor shaft. If the impact is severe, for example as a result of the flail engaging an obstruction and bouncing off it, the rotor shaft and/or the flail may be damaged.

EP 1 915 896 discloses an improved flail element having a cushioning part arranged between the mounting formation and the cutting head to cushion the flail element against impacts with a shaft of a cutting machine. DE3507823 describes a mounting for flail cutters that prevents damage to a flail-cutter shaft.

It is an object of the present invention to provide a further improved flail element.

According to a first aspect of the invention there is provided a flail element for use on a vegetation cutting machine having a mounting formation at one end thereof to enable the flail element to be pivotally mounted on a shaft mounting of a cutting machine, a cutting head at the other end thereof to enable the flail element to cut vegetation and a stem extending between the mounting formation and the cutting head, wherein the stem defines a cavity that extends the length of the stem.

The cavity may have a frustoconical shape.

The weight of the flail element is thus reduced and so the force imparted when the flail element impacts a rotor shaft in use is also reduced, minimising the risk of damage to the rotor shaft and/or flail element itself.

The stem may include a plurality of cavities, which may be inter-connected, for example as an internal open lattice structure. The plurality of cavities may extend the length of the stem and/or connect with an opening in the cutting head and/or a through-hole in the mounting formation. The plurality of cavities may have a generally frustoconical shape.

The flail element may include a raised portion to further reduce the impact force imparted to a rotor shaft in use.

The stem may have a substantially smooth surface. The raised portion may be included on the stem of the flail element. The raised portion may extend from a wall of the stem and/or have a substantially smooth surface. The stem and the raised portion may be formed as a single body, for example moulded as a single piece.

The flail element may include a plurality of raised portions. The flail element may include a pair of raised portions positioned on opposite sides of the stem.

The cutting head may have a body with a generally triangular, for example chevron-shaped, cross-section and a generally rectangular concave base. The base of the cutting head may include an opening. The cutting head may have outer walls that flare out from the top of the body towards the base of the body. The base may have a portion that is filleted from an outer edge of the base towards the opening. The base may have a plurality of portions that are filleted from an outer edge of the base towards the opening.

The base is shaped to prevent cut vegetation building up on a leading edge of the cutting head, which would otherwise prevent fresh vegetation contacting the leading edge of the cutting head, resulting in a poor finish and/or increase the power required by the mower.

The mounting formation, cutting head, stem and raised portion may be formed as a single body, for example moulded as a single piece. Alternatively the flail element may comprise three pieces linked together, the first comprising the mounting formation, the second comprising the cutting head and the third comprising the stem and the raised portion.

The flail element may be formed from a metal, e.g. steel, for example by casting.

According to a second aspect of the invention there is provided a shaft assembly for a vegetation cutting machine having a mounting component for mounting a flail element according to the first aspect.

The flail element in accordance with the invention will now be described in detail by way of example and with reference to the accompanying drawings, in which:

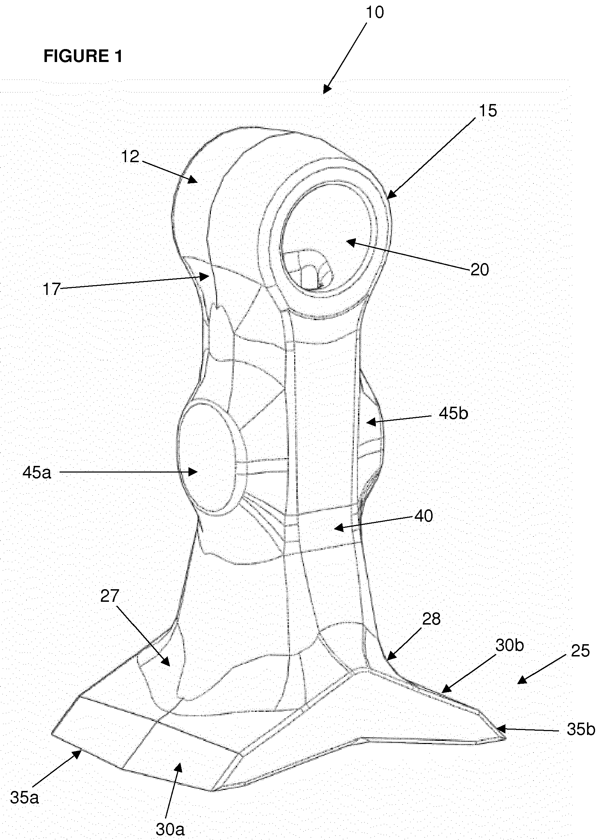

Figure 1 is a perspective view of a flail element in accordance with the first aspect of the invention;

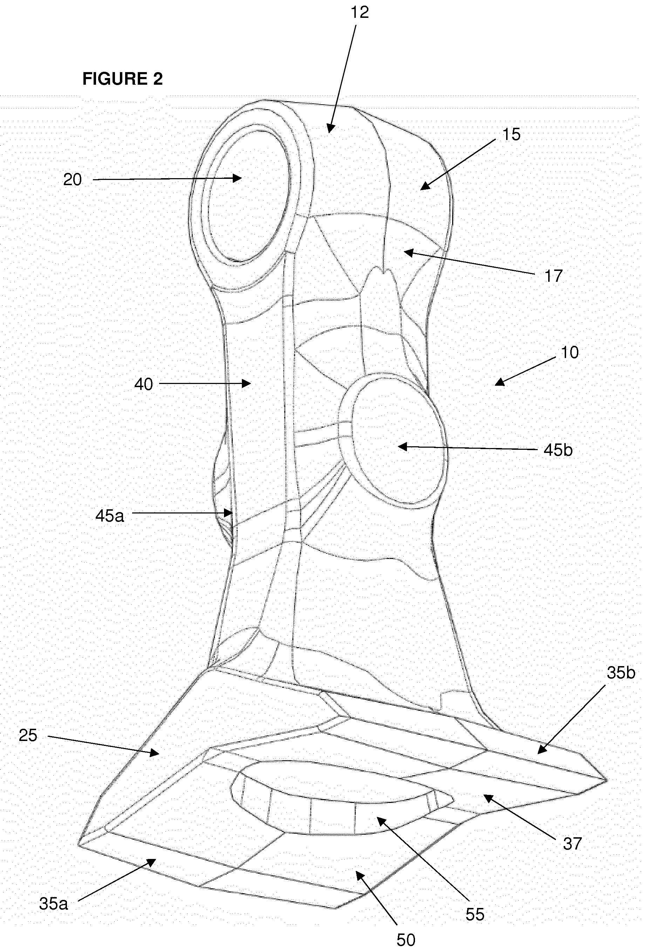

Figure 2 is an alternative perspective view of the flail element of figure 1;
Figure 3 is a cross sectional view of the flail element of figures 1 and 2; and

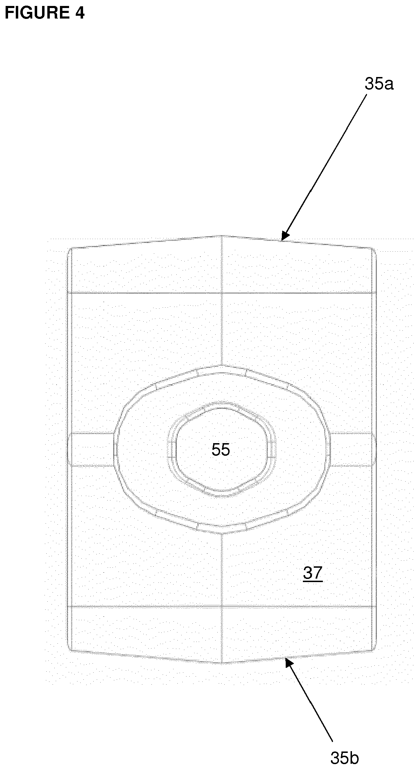

Figure 4 is a view from the base of the flail element of figures 1 and 2.

With reference to the drawings there is shown a flail element 10 for use on a vegetation cutting machine having a mounting formation 15, a cutting head 25 and a stem 40.

The mounting formation 15 has a generally annular body 12 and a through-hole 20. The through-hole 20 is shaped and sized to receive the shaft of a pivot mounting arrangement of a vegetation cutting machine (not shown). The surface of the mounting formation is generally smooth.

The cutting head 25 has a body 28 with a chevron cross section and outer portions 30a, 30b that extend outwardly. Cutting edges 35a, 35b are formed at opposite sides of the cutting head 25, on the outermost edges of the outer portions 30a, 30b. The cutting head 25 has a base 50 that is generally concave, rectangular and has a through-hole 55. The through-hole 55 is funnel-shaped, having a diameter A at or towards the base 50 of the cutting head 25 and a diameter B at or towards the upper portion 27 of the cutting head 25. The inner surface 37 of the base 50 is generally smooth and is filleted from the cutting edges 35a, 35b towards the through-hole 55.

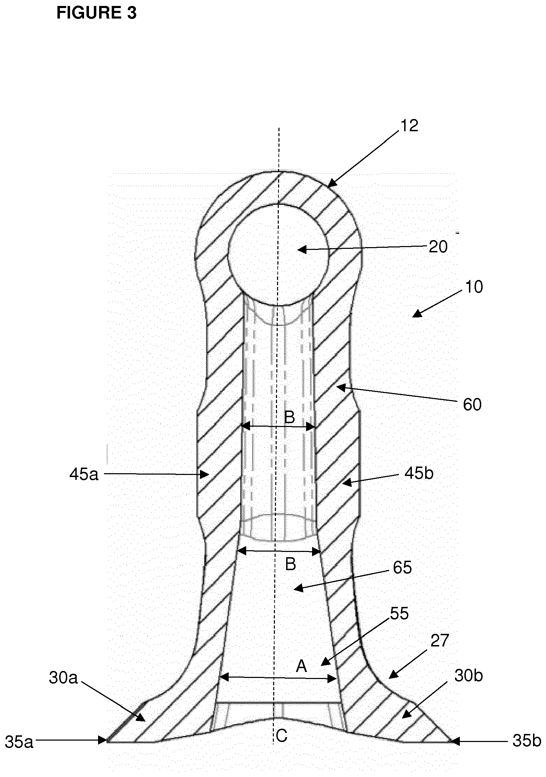

A stem 40 extends between the mounting formation 15 and the cutting head 25 and has a generally smooth surface. Raised portions 45a, 45b extend outwardly relative to a longitudinal axis C of the flail element 10. The raised portions 45a, 45b extend from the surface of the stem 40, are generally frustoconical in shape and have flat circular outer surfaces 45a, 45b. As shown in figure 3, the stem 40 has a through-hole 65 that extends the length of the stem and has a diameter B.

The flail element 10 is formed as a single piece from steel.

The stem 40 extends from a base portion of the mounting formation 15. The through-hole 20 is transverse to the longitudinal axis of the stem 40. A smooth shoulder portion 17 extends between the stem 40 and the mounting formation 15.

The cutting head 25 extends from a base portion of the stem 40. The through-hole 55 is coaxial with the through-hole 65 such that the through-holes 55, 65 are connected and form a channel within the body of the flail element. The walls of the channel have a thickness T that is sufficient to provide a flail element with the required strength. The internal walls of the channel are substantially smooth. Through-holes 55, 65 are connected to through-hole 20.

The flail element 10 as described herein is formed as a single body.

Variations fall within the scope of the present invention.

The flail element may, for example, be formed from three pieces and/or from any suitable material, for example the cutting head, the mounting formation and the stem may be formed as three separate pieces and linked to form a flail element.

## Claims

1. A flail element (10) for use on a vegetation cutting machine having a mounting formation (15) at one end thereof to enable the element to be pivotally mounted on a shaft mounting of a cutting machine, a cutting head (25) at the other end thereof to enable it to cut vegetation and a stem (40) extending between the mounting formation (15) and the cutting head (25), **characterised in that** the stem (40) defines a cavity (65) that extends the length of the stem (40).

2. A flail element (10) according to claim 1, wherein the stem (40) defines a plurality of cavities (55, 65).

3. A flail element (10) according to claim 2, wherein the plurality of cavities (55, 65) are interconnected.

4. A flail element (10) according to any preceding claim, wherein the plurality of cavities (55, 65) extend the length of the flail element (10).

5. A flail element (10) according to any preceding claim, wherein the cavity (65) is at least partially frustoconical.

6. A flail element (10) according to any preceding claim, including a raised portion (45a).

7. A flail element (10) according to claim 6, wherein the raised portion (45a) extends from a wall of the stem (40).

8. A flail element (10) according to claim 6 or claim 7, wherein the flail element (10) includes a pair of raised portions (45a, 45b).

9. A flail element (10) according to claim 8, wherein the pair of raised portions are positioned on opposite sides of the stem (40).

10. A flail element (10) according to any preceding claim formed as a single body.

11. A flail element (10) according to any preceding claim, wherein the cutting head (25) has a concave surface (50) opposite the stem (40).

12. A flail element (10) according to any preceding claim, wherein the cutting head (25) has a chevron-shaped cross-section.

13. A flail element (10) according to claim 11 or claim 12, wherein the cutting head (25) has an opening (55).

14. A flail element (10) according to claim 13, wherein an inner surface of the cutting head is filleted towards the opening (55).

15. An assembly comprising:
a shaft for a vegetation cutting machine and
at least one flail element (10) according to any preceding claim rotatably mounted thereto.

## Patentansprüche

1. Schlegelelement (10) zur Verwendung an einer Pflanzenmähmaschine mit einer Befestigungsanordnung (15) an einem Ende davon, um zu ermöglichen, dass das Element schwenkbar an einer Wellenbefestigung einer Mähmaschine befestigt wird, einem Schneidkopf (25) am anderen Ende davon, um ihm zu ermöglichen, Pflanzen zu mähen, und einem Schaft (40), der sich zwischen der Befestigungsanordnung (15) und dem Schneidkopf (25) erstreckt, **dadurch gekennzeichnet, dass** der Schaft (40) einen Hohlraum (65) abgrenzt, die sich entlang des Schafts (40) erstreckt.

2. Schlegelelement (10) nach Anspruch 1, wobei der Schaft (40) eine Vielzahl von Hohlräumen (55, 65) abgrenzt.

3. Schlegelelement (10) nach Anspruch 2, wobei die Vielzahl von Hohlräumen (55, 65) miteinander verbunden sind.

4. Schlegelelement (10) nach einem der vorherigen Ansprüche, wobei sich die Vielzahl von Hohlräumen (55, 65) entlang dem Schlegelelement (10) erstreckt.

5. Schlegelelement (10) nach einem der vorherigen Ansprüche, wobei der Hohlraum (65) wenigstens teilweise kegelstumpfförmig ist.

6. Schlegelelement (10) nach einem der vorherigen Ansprüche, enthaltend einen erhabenen Teil (45a).

7. Schlegelelement (10) nach Anspruch 6, wobei sich der erhabene Teil (45a) von einer Wand des Schafts (40) erstreckt.

8. Schlegelelement (10) nach Anspruch 6 oder Anspruch 7, wobei das Schlegelelement (10) ein Paar von erhabenen Teilen (45a, 45b) enthält.

9. Schlegelelement (10) nach Anspruch 8, wobei das Paar erhabener Teile an gegenüberliegenden Seiten des Schafts (40) angeordnet ist.

10. Schlegelelement (10) nach einem der vorherigen Ansprüche, das als einzelner Körper ausgebildet ist.

11. Schlegelelement (10) nach einem der vorherigen Ansprüche, wobei der Schneidkopf (25) eine konkave Oberfläche (50) gegenüber dem Schaft (40) aufweist.

12. Schlegelelement (10) nach einem der vorherigen Ansprüche, wobei der Schneidkopf (25) einen pfeilförmigen Querschnitt aufweist.

13. Schlegelelement (10) nach Anspruch 11 oder Anspruch 12, wobei der Schneidkopf (25) eine Öffnung (55) aufweist.

14. Schlegelelement (10) nach Anspruch 13, wobei eine innere Oberfläche des Schneidkopfs zur Öffnung (55) hin ausgerundet ist.

15. Anordnung, umfassend:
eine Welle für eine Pflanzenmähmaschine und
wenigstens ein Schlegelelement (10) nach einem der vorherigen Ansprüche drehbar daran befestigt.

## Revendications

1. Élément de fléau (10) pour une utilisation sur une machine de coupe de végétation ayant une formation de montage (15) au niveau d'une extrémité de celle-ci pour permettre à l'élément d'être monté pivotant sur un montage d'arbre d'une machine de coupe, une tête de coupe (25) au niveau de l'autre extrémité de celle-ci pour lui permettre de couper la végétation et une tige (40) s'étendant entre la formation de montage (15) et la tête de coupe (25), **caractérisé en ce que** la tige (40) définit une cavité (65) qui prolonge la longueur de la tige (40).

2. Élément de fléau (10) selon la revendication 1, dans lequel la tige (40) définit une pluralité de cavités (55, 65).

3. Élément de fléau (10) selon la revendication 2, dans lequel la pluralité de cavités (55, 65) sont reliées entre elles.

4. Élément de fléau (10) selon l'une quelconque des revendications précédentes, dans lequel la pluralité de cavités (55, 65) prolonge la longueur de l'élément de fléau (10).

5. Élément de fléau (10) selon l'une quelconque des revendications précédentes, dans lequel la cavité (65) est au moins partiellement tronconique.

6. Élément de fléau (10) selon l'une quelconque des revendications précédentes, comportant une portion surélevée (45a).

7. Élément de fléau (10) selon la revendication 6, dans lequel la portion surélevée (45a) s'étend à partir d'une paroi de la tige (40).

8. Élément de fléau (10) selon la revendication 6 ou la revendication 7, dans lequel l'élément de fléau (10) comporte une paire de portions surélevées (45a, 45b).

9. Élément de fléau (10) selon la revendication 8, dans lequel les portions surélevées de la paire sont positionnées sur des côtés opposés de la tige (40).

10. Élément de fléau (10) selon l'une quelconque des revendications précédentes, formé d'une seule pièce.

11. Élément de fléau (10) selon l'une quelconque des revendications précédentes, dans lequel la tête de coupe (25) a une surface concave (50) à l'opposé de la tige (40).

12. Élément de fléau (10) selon l'une quelconque des revendications précédentes, dans lequel la tête de coupe (25) a une coupe transversale en forme de chevron.

13. Élément de fléau (10) selon la revendication 11 ou la revendication 12, dans lequel la tête de coupe (25) comporte une ouverture (55).

14. Élément de fléau (10) selon la revendication 13, dans lequel une surface interne de la tête de coupe est en filet vers l'ouverture (55).

15. Ensemble comprenant :
un arbre pour une machine de coupe de végétation et
au moins un élément de fléau (10) selon l'une quelconque des revendications précédentes monté de façon rotative sur celui-ci.
